# EUROPÄISCHE PATENTSCHRIFT

(11) **EP 0 885 711 B1**
(45) Veröffentlichungstag und Bekanntmachung des Hinweises auf die Patenterteilung: **28.07.1999**
(21) Anmeldenummer: 98104727.7
(22) Anmeldetag: 16.03.1998
(51) Int. Cl.: B29C 47/00, B29C 47/22

(54) **Extrusionskopf für eine Anlage zum Extrusionsblasformen von Höhlkörpern, insbesondere Kunststoff-Kraftstoffbehälter**
Extrusion head for an apparatus to extrusion blow mould hollow articles, especially plastic fuel tanks
Tête d'extrusion pour un appareil d'extrusion-soufflage d'objets creux, notamment des réservoirs de carburant

(30) Priorität: 12.06.1997 DE 19724692
(43) Veröffentlichungstag der Anmeldung: 23.12.1998
(73) Patentinhaber: Feuerherm, Harald, D-53840 Troisdorf (DE)
(72) Erfinder: Feuerherm, Harald, D-53840 Troisdorf (DE)
(74) Vertreter: Albrecht, Rainer Harald, Dr.-Ing.

(56) Entgegenhaltungen:
- WO-A-94/09964
- DE-U- 29 707 060
- US-A- 4 382 766
- PATENT ABSTRACTS OF JAPAN vol. 010, no. 227 (M-505), 7. August 1986 & JP 61 061809 A (NISSAN MOTOR CO LTD), 29. März 1986

## Beschreibung

Die Erfindung betrifft einen Extrusionskopf für eine Anlage zum Extrusionsblasformen von Hohlkörpern, insbesondere Kunststoff-Kraftstoffbehältern, mit
einem Düsengehäuse,
einem Düsenkern,
einer am Düsenaustritt angeordneten elastisch verformbaren Hülse und
einer auf die Hülse wirkenden Stelleinrichtung,
wobei die Hülse einen Wandabschnitt eines zwischen dem Düsengehäuse und dem Düsenkern angeordneten Düsenringspaltes bildet und wobei die Stelleinrichtung mindestens einen während der Extrusion steuerbaren Kraftantrieb aufweist, dessen Stellbewegung in mindestens einer radial zur Mittelachse des Düsenkerns ausgerichteten Deformationsachse Zug- und/oder Druckkräfte auf die Hülse ausübt. Der Düsenkern weist meistens eine Dornaufnahme und einen axial verstellbaren Dorn auf.

Aus der Düse des Extrusionskopfes, die Bestandteil einer Extruderanlage oder einer Speicherkopfmaschine sein kann, tritt ein thermoplastifizierter Schlauch aus, der in einer nachgeordneten Blasform unter Druck aufgeweitet und zu einem Hohlkörper geformt wird. Die Materialverteilung des thermoplastifizierten Schlauches ist sowohl in Schlauchlängsrichtung als auch in Umfangsrichtung ungleichmäßig und besteht aus einer Folge von Dick- und Dünnstellen. Schlauchabschnitte, die in der Blasform stark aufgeweitet und einer großen Reckung unterliegen, sind dickwandig auszuführen; Schlauchabschnitte, die in der Blasform nur wenig aufgeweitet und gereckt werden, sind entsprechend dünner auszubilden. In der Praxis soll die Materialverteilung des thermoplastifizierten Schlauches meistens so eingestellt werden, daß der die Blasform verlassende Hohlkörper überall eine annähernd gleichmäßige Wandstärke aufweist. Im Rahmen einer Programmsteuerung wird der Düsenringspalt während des Schlauchaustritts geregelt, und zwar sowohl in bezug auf die Ringspaltbreite als auch in bezug auf die Ringspaltgeometrie. Die Breite des Düsenringspaltes ist primär durch axiale Stellbewegungen des Dornes, in seltenen Fällen auch durch eine axiale Stellbewegung des Düsengehäuses relativ zum Düsenkern steuerbar. Die Beeinflussung der Düsengeometrie erfolgt mit Hilfe der auf die elastische Hülse wirkenden Stelleinrichtung. Während des Schlauchaustritts aus dem Extrusionskopf sind in rascher Folge Stellbewegungen erforderlich, um die Materialverteilung in Umfangsrichtung in der gewünschten Weise zu beeinflussen. Um dies deutlich zu machen, wird im folgenden auch der Begriff der dynamischen Regelung verwendet. Dynamische Regelung bezeichnet im Rahmen der Erfindung Stellbewegungen, die bei jedem Maschinenzyklus wiederholt werden. Um reproduzierbare Ergebnisse bei der Blasformgebung zu erreichen, ist außerdem eine exakte Düsenzentrierung erforderlich. Für die Düsenzentrierung muß der Düsenringspalt ebenfalls variabel verstellbar sein und die Möglichkeit bestehen, während des Betriebs der Blasformanlage Korrekturen an der Geometrie des Düsenringspaltes vorzunehmen.

Bei dem Stand der Technik, von dem die Erfindung ausgeht (Plastverarbeiter 32 (1981) Nr. 3, Seiten 326 bis 330) weist die auf die Hülse wirkende Stelleinrichtung zwei Kraftantriebe in Form von Servostellzylindern auf, die in einer Deformationsachse angeordnet sind und an gegenüberliegenden Stellen zug- und druckfest an die Hülse angeschlossen sind. Die Kraftantriebe führen Stellbewegungen aus, wobei der Querschnitt der elastischen Hülse sowohl durch Zug als auch durch Druckkräfte elliptisch verformbar ist. Ferner können die Stellbewegungen der beiden Kraftantriebe so eingerichtet sein, daß die Hülse unter Beibehaltung ihres zylindrischen Querschnittes in der von den Kraftantrieben vorgegebenen Deformationsachse radial in bezug auf den Dorn verschoben wird. Durch entsprechende Steuerungen der beiden Kraftantriebe können Deformations- und Schiebebewegung in der Deformationsachse auch überlagert werden. Die bekannte Vorrichtung hat sich in der Praxis bewährt. Noch unbefriedigend ist, daß Abschnitte des Düsenringspaltes, die etwa 45° zu den Kraftangriffspunkten ausgerichtet sind, weder durch zugbeanspruchende noch durch druckbeanspruchende Deformationen der Hülse in ausreichendem Maße beeinflußt werden können. Sie stellen deformationsneutrale Ringspaltabschnitte dar.

Bei einem aus DE-C 196 03 231 bekannten Extrusionskopf für das Blasformen von Hohlkörpern ist an den Dorn eine elastisch verformbare Hülse angeschlossen, die durch vier überkreuz angeordnete Spreizelemente radial deformierbar ist. Die Spreizelemente sind durch eine Zugstange betätigbar und führen synchrone Bewegungen aus. Die Kanalgeometrie ist nur in symmetrischer Weise veränderbar. Auch hier sind deformationsneutrale Bereiche vorhanden.

Aus DE-A 195 37 132 ist ein Extrusionskopf bekannt, dessen Düsengehäuse radial verschiebbar ausgeführt ist. Die Radialverstellung erfolgt durch zwei winkelversetzt angeordnete Stellringe. Die bekannte Vorrichtung wird im Zuge der Blasformung von Rohrkrümmern eingesetzt. Eine variable Veränderung der Düsengeometrie, die bei blasgeformten Behältern und insbesondere Kunststoff-Kraftstoffbehältern erforderlich ist, ist nicht oder nur unzulänglich möglich.

Der Erfindung liegt die Aufgabe zugrunde, einen Extrusionskopf des eingangs beschriebenen Aufbaus so weiter auszubilden, daß eine sehr variable Änderung der Geometrie des Düsenringspaltes unter Vermeidung deformationsneutraler Bereiche möglich ist.

Gemäß einer ersten Ausführung der Erfindung wird die Aufgabe dadurch gelöst, daß die Hülse und der zugeordnete Kraftantrieb an einem Tragring angeordnet sind, der im Düsengehäuse radial beweglich angeordnet und mittels eines steuerbaren Zusatzkraftantriebes radial verstellbar ist, wobei durch Superposition der Stellbewegungen des Kraftantriebes sowie des Zusatzkraftantriebes die Geometrie des Düsenringspaltes am Düsenaustritt dynamisch regelbar ist. Durch Superposition einerseits der Schiebebewegung des Tragringes, und andererseits einer Deformierung und/oder Radialbewegung der elastisch verformbaren Hülse am Tragring sind beachtliche und variable Änderungen bezüglich der Geometrie des Düsenringspaltes möglich. Zwar ist nicht generell ausgeschlossen, daß die Schieberichtung des Tragrings mit der Deformationsachse der elastisch verformbaren Hülse zusammenfällt, vorzugsweise ist die Schieberichtung jedoch winklig zur Deformationsachse ausgerichtet. In vielen Fällen wird eine rechtwinklige Ausrichtung sinnvoll sein.

Die erfindungsgemäße Lehre hat beachtliche Vorteile bei der Extrusion dickwandiger Blasformteile. Bei dickwandigen Blasformteilen sind breite Düsenringspalte erforderlich. Entsprechend groß müssen auch die Deformations- und Verschiebewege eingerichtet sein. Die Superposition einerseits einer Stellbewegung des Tragringes und andererseits einer Deformierung der Hülse erlaubt es, auch bei der Extrusion dickwandiger Schläuche ausreichende Korrekturen, die sich bezogen auf die mittlere Wandstärke bemerkbar machen, durchzuführen. Durch die Verschiebung des Tragringes kann auf den Fließkanal, also den Düsenringspalt, Einfluß genommen werden, und zwar unter Beibehaltung von schmalen stirnseitigen Gleitflächen der Hülse.

Vorzugsweise ist der Tragring im Düsengehäuses radial beweglich abgestützt, nimmt Axialkräfte auf und überträgt diese auf das Düsengehäuse, wobei der Zusatzkraftantrieb am Düsengehäuse befestigt ist und biegemomentfrei auf den Tragring arbeitet. In weiterer Ausgestaltung lehrt die Erfindung, daß eine Mehrzahl von Kupplungsausnehmungen am Umfang des Tragringes verteilt angeordnet sind und daß der Zusatzkraftantrieb einen an die Kupplungsausnehmungen angepaßten Anschlußzapfen aufweist, wobei die Ausrichtung der Kraftwirkungslinie des Zusatzkraftantriebes zur Deformationsachse durch die Zuordnung des Anschlußzapfens und der Kupplungsausnehmung mit einer entsprechenden Drehung des Tragringes einstell- und betriebsmäßig veränderbar ist. Die Position des Zusatzkraftantriebes und damit die Ausrichtung der Kraftwirkungslinie zur Deformationsachse ist bei dieser Ausführung von dem Benutzer jederzeit veränderbar. Es ist auch möglich, eine Konstruktion zu wählen, die eine stufenlose Einstellung erlaubt. Ferner kann es zweckmäßig sein, den Winkel zwischen der Kraftwirkungslinie des Zusatzkraftantriebes und der durch den Kraftantrieb vorgegebenen Deformationsachse während der Extrusion des Schlauches dynamisch zu verändern. Im Rahmen der Erfindung liegt es schließlich, bei der Fertigung extrem schwieriger Hohlkörper zwei Zusatzkraftantriebe unter beliebigen Winkeln einzusetzen. Die erfindungsgemäße Lehre ermöglicht eine variable Anpassung an unterschiedliche Fertigungsaufgaben.

Bei den vorstehend beschriebenen Ausführungen der Erfindung ist der Zusatzkraftantrieb an einen Tragring angeschlossen. Eine alternative Ausführung der Erfindung sieht vor, daß an die Hülse mindestens ein Zusatzkraftantrieb angeschlossen ist, wobei die Kraftrichtung des Zusatzkraftantriebes radial unter einem beliebig einstellbaren Winkel zur Deformationsachse ausgerichtet ist und wobei die Abstützung des Zusatzkraftantriebes an der Hülse eine Verschiebebewegung der Hülse mit einer Bewegungskomponente quer zur Kraftrichtung des Zusatzkraftantriebes zuläßt. Die Abstützung kann in Form eines in radialer Richtung wirkenden Anschlages ausgebildet sein. Vorzugsweise ist der Zusatzkraftantrieb jedoch unter Zwischenschaltung eines Gelenks zug- und druckfest an die Hülse angeschlossen, wobei das Zwischengelenk zwei Gelenkachsen aufweist und einen Versatz des Kraftangriffspunktes in Umfangsrichtung der Hülse ausgleicht. Vorzugsweise arbeiten auf die elastisch verformbare Hülse zwei Zusatzkraftantriebe, die in einer Achse angeordnet und unabhängig ansteuerbar sind, wobei nach Maßgabe der Stellbewegungen der Zusatzantriebe die Hülse deformierbar ist. Radiale Verschiebebewegungen und Deformationen, die durch Zug- und/oder Druckkräfte der unmittelbar auf die Hülse wirkenden Kraftantriebe sowie durch Zug- und/oder Druckkräfte der unter Zwischenschaltung eines Gelenks auf die Hülse einwirkenden Zusatzkraftantriebe ausgeübt werden, überlagern sich. Die Einschaltung von Zwischengelenken zwischen Hülse und Zusatzkraftantrieben ermöglicht es, daß die Wirkungsachse der Zusatzkraftantriebe beliebig zu der durch die Kraftantriebe definierten Deformationsachse ausgerichtet werden kann. Die beliebige Ausrichtung der Wirkungsachse der Zusatzkraftantriebe, die der Anwender dem Anwendungsfall entsprechend festlegen kann, ermöglicht variable Einstellungen und Veränderungen des Düsenringspaltes.

Eine weitere Ausführung der Erfindung sieht vor, daß auf die Hülse ein Kraftantrieb sowie ein Zusatzkraftantrieb arbeiten, wobei der Kraftantrieb zug- und druckfest an die Hülse angeschlossen ist, wobei der Zusatzkraftantrieb unter Zwischenschaltung eines Gelenks ebenfalls zug- und druckfest angeschlossen ist, und daß der Hülse ein zusätzlicher Anschlag zugeordnet ist, wobei der Kraftantrieb, der Zusatzkraftantrieb und der Anschlag am Umfang der Hülse verteilt angeordnet sind.

Im Rahmen der Erfindung liegt es auch, daß der elastisch verformbaren Hülse ein Anschlag zugeordnet ist, der am Düsengehäuse oder am Tragring radial einstellbar angeordnet ist. Der Anschlag kann einen Stellantrieb aufweisen und dynamisch geregelte Stellbewegungen ausführen, die auf die Stellbewegungen des Kraft- und Zusatzkraftantriebes abgestimmt sind. Schließlich liegt es im Rahmen der Erfindung, daß der Kraftantrieb über eine Gestängeanordnung ein Stellelement betätigt, das bei einer Stellbewegung des Kraftantriebes auf die Hülse deformierend einwirkt.

Bei den vorstehend beschriebenen Ausführungen der Erfindung ist zumindest ein Zusatzkraftantrieb als aktives Element zur Beeinflussung der Düsenringspaltgeometrie vorgesehen. Anstelle eines aktiven Elementes, welches einen vom Programmablauf gesteuerten Stellhub während der Extrusion des schlauchförmigen Vorformlings ausführt, können auch ein oder mehrere passive Elemente in Form von Anschlagelementen vorgesehen sein. Eine weitere Ausführung der Erfindung ist dadurch gekennzeichnet, daß mindestens ein im Düsengehäuse abgestütztes Anschlagelement zum Kraftantrieb versetzt am Umfang der Hülse angeordnet ist, welches bei einer durch die Stellbewegung des Kraftantriebes bewirkten Verschiebung und/oder Deformation der Hülse an der Hülse anliegt und deformierend auf diese einwirkt. Die Abstützung des Anschlagelementes an der Hülse läßt eine Verschiebebewegung der Hülse an der Kontaktfläche des Anschlagelementes zu. Vorzugsweise sind zwei Anschlagelemente diametral gegenüberliegend am Umfang der Hülse angeordnet. Die durch die Abstützpunkte der Anschlagelemente verlaufende Kraftwirkungslinie kann eine beliebige Ausrichtung zur Deformationsachse aufweisen. Vorzugsweise sind die Kraftwirkungslinie und die Deformationsachse unter einem Winkel von etwa 90° zueinander ausgerichtet. Schließlich liegt es im Rahmen der Erfindung, daß die Anschlagelemente in Umfangsrichtung der Hülse betriebsmäßig verstellbar angeordnet sind. Ferner sind die Anschlagelemente zweckmäßig radial verstellbar am Düsengehäuse positioniert. Im Rahmen der Erfindung liegt es schließlich, daß ein oder mehrere Anschlagelemente jeweils einen Stellantrieb aufweisen und von dem Programmablauf gesteuerte Stellbewegungen in Umfangsrichtung und/oder in radialer Richtung ausführen.

Abgesehen von den beschriebenen Steuerungsvorgängen erlaubt die erfindungsgemäße Anordnung auch eine Düsenfernzentrierung mit der Möglichkeit, den Düsenringspalt ohne Unterbrechung des Blasformbetriebes zu korrigieren, wenn die Wandstärke der blasgeformten Hohlkörper in einem Umfangsabschnitt von dem Vorgabewert abweicht. Gegenstand der Erfindung ist auch ein Extrusionskopf gemäß Anspruch 14, der einen steuerbaren Kraftantrieb sowie einen fernbetätigten Zusatzkraftantrieb aufweist, wobei die Hülse und der zugeordnete Kraftantrieb an einem Tragring angeordnet sind, der im Düsengehäuse radial beweglich angeordnet und mittels des fernbetätigten Zusatzkraftantriebes radial verstellbar ist, wobei die durch den Kraftantrieb vorgegebene Deformationsachse und die durch die Kraftrichtung des Zusatzkraftantriebes vorgegebene Verschiebeachse unter einem Winkel von 45° bis 90° zueinander ausgerichtet sind und durch Superposition der Stellwege eine Änderung der Geometrie des Düsenringspaltes am Düsenaustritt zum Zwecke der Düsenzentrierung erfolgt. Auch bei dieser Ausführung sind alle zuvor beschriebenen konstruktiven Ausgestaltungen möglich. Der Tragring kann im Düsengehäuse radial beweglich abgestützt sein, wobei er Axialkräfte aufnimmt und diese auf das Düsengehäuse überträgt. Der Zusatzkraftantrieb ist am Düsengehäuse befestigt und arbeitet biegemomentfrei auf den Tragring. Der Tragring ist stufenlos oder in einer vorgegebenen Rasterung drehbar. In weiteren Ausgestaltungen lehrt die Erfindung, daß eine Mehrzahl von Kupplungsausnehmungen am Umfang des Tragrings verteilt angeordnet sind und daß der Zusatzkraftantrieb einen an die Kupplungsausnehmungen angepaßten Anschlußzapfen aufweist, wobei die Ausrichtung der Kraftwirkungslinie des Zusatzkraftantriebes zur Deformationsachse durch die Zuordnung des Anschlußzapfens und der Kupplungsausnehmung mit einer entsprechenden Drehung des Tragringes einstell- und betriebsmäßig veränderbar ist.

Bei allen zuvor beschriebenen Ausführungen sind an die elastisch verformbare Hülse zweckmäßig zwei Kraftantriebe zug- und druckfest angeschlossen, die in der Deformationsachse angeordnet sind, an gegenüberliegenden Stellen an die Hülse angreifen und unabhängig ansteuerbar sind, wobei nach Maßgabe der Stellbewegungen der beiden Kraftantriebe die Hülse durch Zug oder Druck deformierbar und/oder in Richtung der Deformationsachse radial zur Mittelachse des Düsenkerns verschiebbar ist.

Die Ausbildung und Anordnung der elastisch deformierbaren Hülse kann im Rahmen der Erfindung auf verschiedene Weise erfolgen. Gemäß einer ersten Ausführungsform ist das vom Düsenaustritt abgewandte Ende der Hülse als formstabiler Kragen ausgebildet, der radial- sowie axialfest an dem Tragring oder einer Sitzfläche des Düsengehäuses gehalten ist, und daß an den Kragen ein dünnwandiger, elastisch verformbarer Mantel angeformt ist, dessen vorderseitige Stirnfläche radial beweglich an einer Flanschfläche des Tragringes bzw. des Düsengehäuses anliegt. Eine andere Ausführung sieht vor, daß die elastisch verformbare Hülse in einen Ringraum des Tragringes oder des Düsengehäuses eingesetzt ist und beide Stirnflächen der Hülse an zugeordneten Ringflächen des Ringraumes gleiten.

Zusätzlich und in Kombination mit den beschriebenen Maßnahmen kann der Düsenkern eine den Düsenringspalt begrenzende elastisch verformbare Manschette sowie auf die Manschette im wesentlichen radial einwirkende Stellelemente aufweisen. Mittels der Stellelemente ist die Außenkontur der Manschette einstellbar und erfährt die Geometrie des zwischen der Manschette und der elastisch verformbaren Hülse gebildeten Düsenabschnittes des Düsenringspaltes durch eine Betätigung der Stellelemente eine Grundeinstellung. Ein oder mehrere Stellelemente können fernbetätigt und auch vom Programmablauf gesteuert werden. Es handelt sich zumeist nur um eine Grundeinstellung, die der Operateur bei der Einrichtung der Maschine vornimmt. Vorzugsweise sind die Stellelemente an mindestens eine koaxial zur Mittelachse des Düsenkerns angeordnete Betätigungsstange angeschlossen, die axial verschiebbar und/oder drehbar im Düsenkern angeordnet ist und zum Zwecke der Betätigung der Stellelemente einen Stellhub und/oder eine Drehbewegung ausführt. Im Düsenkern können zwei oder mehrere Betätigungsstangen koaxial angeordnet sein, an die jeweils ein Stellelement oder eine Gruppe von Stellelementen oder eine profilierte Scheibe angeschlossen sind, wobei die Stellelemente bzw. die profilierte Scheibe mittels der zugeordneten Betätigungsstange unabhängig voneinander steuerbar sind. Der Düsenkern weist ferner zweckmäßig eine Dornaufnahme sowie einen axial verstellbaren Dorn auf, an den die flexible Manschette angeschlossen ist. Die Betätigungsstangen sind im Dorn beweglich geführt.

Im folgenden wird die Erfindung anhand einer lediglich ein Ausführungsbeispiel darstellenden Zeichnung ausführlich erläutert. Es zeigen schematisch
- Fig. 1: den Längsschnitt durch einen Extrusionskopf für eine Anlage zum Extrusionsblasformen von Hohlkörpern, in der Schnittebene I-I aus Fig. 2,
- Fig. 2: den Querschnitt II-II aus Fig. 1,
- Fig. 3 bis 5: weitere Ausführungen der Erfindung, ebenfalls im Querschnitt,
- Fig. 6 bis 8: weitere Ausführungen der Erfindung, ausschnittsweise und im Längsschnitt (entsprechend der für die Fig. 1 gewählten Schnittebene),
- Fig. 9: eine Ablaufsteuerung für die Stellbewegungen der Kraftantriebe sowie des Zusatzkraftantriebes bei einem Extrusionskopf gemäß Fig. 1,
- Fig. 10a bis 10j: Beispiele für die Änderung der Geometrie des Düsenringspaltes.

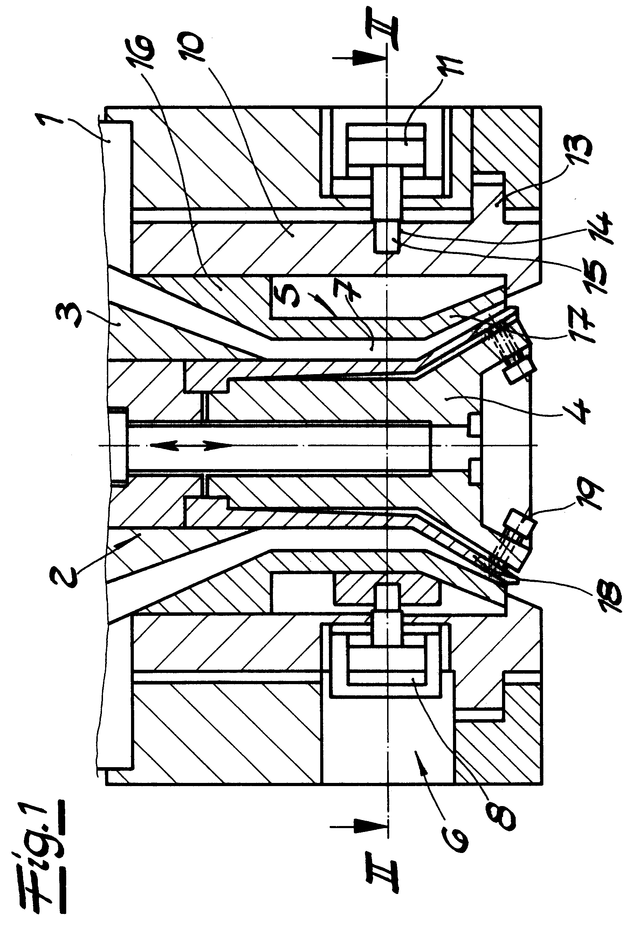

Der in Fig. 1 im Längsschnitt dargestellte Extrusionskopf ist für eine Anlage zum Extrusionsblasformen von Hohlkörpern, z. B. Kunststoff-Kraftstoffbehältern, bestimmt. Er weist ein Düsengehäuse 1, einen Düsenkern 2 mit Dornaufnahme 3 und axial verstellbarem Dorn 4, eine am Düsenaustritt angeordnete elastisch verformbare Hülse 5 sowie eine auf die Hülse 5 wirkende Stelleinrichtung 6 auf. Die Hülse 5 bildet einen Wandabschnitt eines zwischen dem Düsengehäuse 1 und dem Düsenkern 2 angeordneten Düsenringspaltes 7. Die Stelleinrichtung 6 weist im Ausführungsbeispiel zwei während der Extrusion steuerbare Kraftantriebe 8 auf, deren Stellbewegung in einer radial zur Mittelachse des Düsenkerns ausgerichteten Deformationsachse 9 Zug- und/oder Druckkräfte auf die Hülse 5 ausübt. Die Kraftantriebe 8 sind schematisch als Zylinderkolbenanordnungen dargestellt. In der Praxis werden vorzugsweise lineare Stellantriebe mit integrierten Wegaufnehmern eingesetzt.

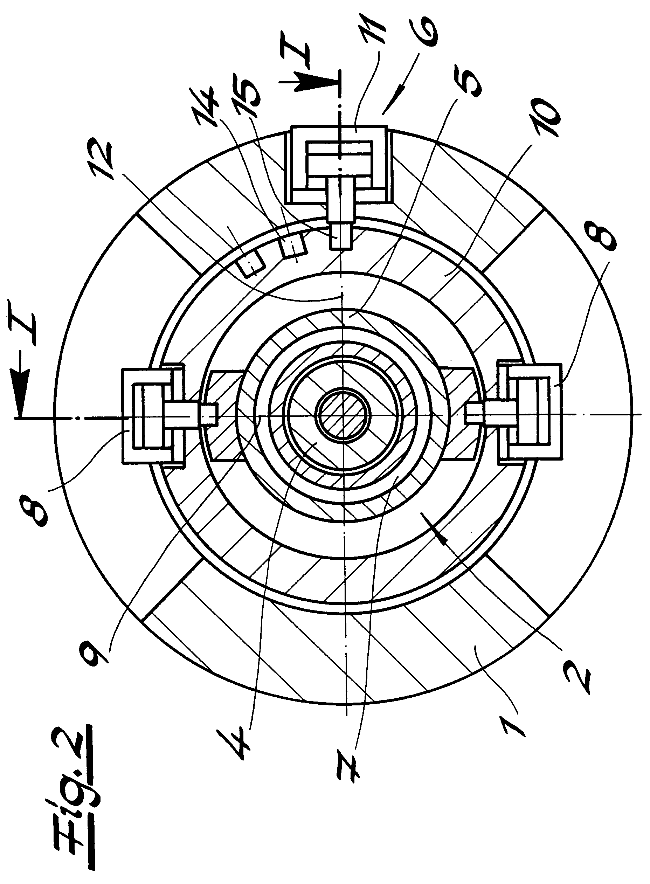

Einer vergleichenden Betrachtung der Fig. 1 und 2 entnimmt man, daß die elastisch verformbare Hülse 5 mit ihren zugeordneten Kraftantrieben 8 an einem Tragring 10 angeordnet sind, der im Düsengehäuse 1 radial beweglich angeordnet und mittels eines steuerbaren Zusatzkraftantriebes 11 radial verstellbar ist. Auch der Zusatzkraftantrieb 11 ist in der Praxis vorzugsweise als linearer Stellantrieb mit integriertem Wegaufnehmer ausgebildet. Durch Superposition der Stellbewegungen der Kraftantriebe 8 sowie des Zusatzkraftantriebes 11 ist die Geometrie des Düsenringspaltes 7 am Düsenaustritt dynamisch regelbar. In den Fig. 10a bis 10j sind an Beispielen Düsenspaltgeometrien dargestellt, die sich durch Superposition von Stellbewegungen der in der Deformationsachse 9 wirkenden beiden Kraftantriebe 8 sowie eines in einer rechtwinklig dazu angeordneten Verschiebeachse 12 wirkenden Zusatzkraftantriebes 11 ergeben.

Der Tragring 10 weist einen Außenflansch 13 auf, der auf einem Innenbund des Düsengehäuses 1 radial beweglich abgestützt ist, auf den Tragring 10 wirkende Axialkräfte aufnimmt und diese auf das Düsengehäuse 1 überträgt. Dadurch arbeitet der Zusatzkraftantrieb 11, der am Düsengehäuse 1 befestigt ist, biegemomentfrei auf den Tragring 10. In Fig. 2 ist angedeutet, daß eine Mehrzahl von Kupplungsausnehmungen 14 am Umfang des Tragringes 10 verteilt angeordnet sind und daß der Zusatzkraftantrieb 11 einen an die Kupplungsausnehmungen 14 angepaßten Anschlußzapfen 15 aufweist. Die Ausrichtung der Kraftwirkungslinie des Zusatzkraftantriebes (auch Verschiebeachse 12 genannt) zur Deformationsachse 9 ist durch die Zuordnung des Anschlußzapfens 15 und der Kupplungsausnehmung 14 mit einer entsprechenden Drehung des Tragringes 10 einstell- und betriebsmäßig veränderbar.

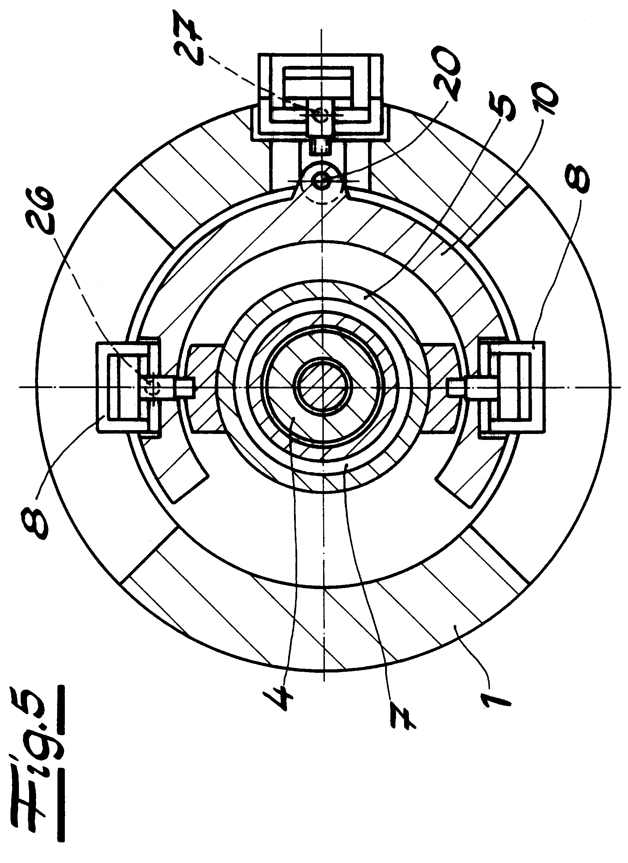

Bei der in Fig. 5 dargestellten Ausführung ist einer der Kraftantriebe 8 mit einer senkrechten Gelenkachse 26 ausgeführt. Der Zusatzkraftantrieb ist unter Zwischenschaltung von zwei vertikalen Gelenkachsen 20 und 27 an den Tragring 10 angeschlossen, der in diesem Ausführungsbeispiel als Ringsegment ausgebildet ist. Auch andere Gestaltungen des Tragringes sind möglich.

Bei der in Fig. 1 dargestellten Ausführungsform der Erfindung weist die elastisch verformbare Hülse 5 einen formstabilen Kragen 16 an ihrem rückwärtigen, vom Düsenaustritt abgewandten Ende auf. Der Kragen 16 ist radial- sowie axialfest an dem Tragring 10 gehalten. An den Kragen 16 ist ein dünnwandiger, elastisch verformbarer Mantel 17 angeformt, dessen vorderseitige Stirnfläche radialbeweglich an einer Flanschfläche des Tragringes 10 anliegt. Im Rahmen der Erfindung liegt es auch, ohne Flanschfläche zu arbeiten und die Hülse in einer anderen geeigneten Weise zu halten.

Der Dorn 4 weist eine den Düsenringspalt 7 begrenzende elastisch verformbare Manschette 18 sowie auf die Manschette im wesentlichen radial einwirkende Stellelemente 19 auf. Eine Mehrzahl dieser Stellelemente 19 können am Umfang verteilt angeordnet sein. Mittels der Stellelemente 19 ist die Außenkontur der Manschette einstellbar, wobei die Geometrie des zwischen der Manschette 18 und der elastisch verformbaren Hülse 5 gebildeten Düsenabschnittes des Düsenringspaltes 7 durch eine Betätigung eines oder mehrerer Stellelemente 19 eine Grundeinstellung erfährt. Im Ausführungsbeispiel sind die auf die Manschette wirkenden Stellelemente 19 als manuell betätigbare Stellschrauben ausgebildet. Im Rahmen der Erfindung liegt es, auch eine oder mehrere fernbetätigbare Stelleinrichtungen einzusetzen.

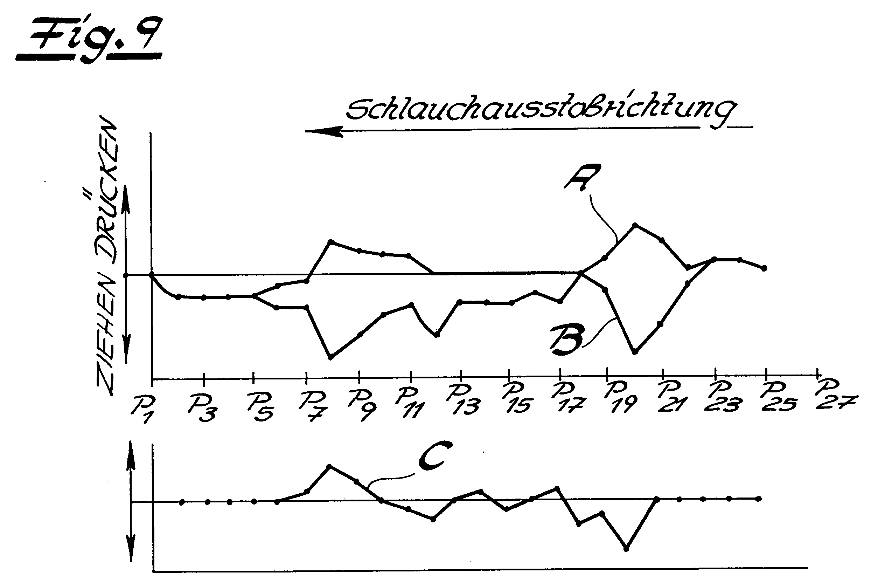

Bei der in Fig. 7 dargestellten Ausführung sind an die Stellelemente 19 koaxial zur Mittelachse des Düsenkerns 2 angeordnete Betätigungsstangen 23 angeschlossen, die axial verschiebbar und/oder drehbar im Düsenkern 2 angeordnet sind und zum Zwecke der Betätigung der Stellelemente 19 einen Stellhub und/oder eine Drehbewegung ausführen. Im Ausführungsbeispiel sind zwei koaxial angeordnete Betätigungsstangen 23 vorgesehen, die axial verschiebbar sind und jeweils mit Stellelementen 19 und/oder einer profilierten Scheibe 25, die entsprechend der gewünschten Kontur des Düsenringspaltes in Umfangsrichtung profiliert ist, ausgerüstet sind. Die Stellelemente 19 und/oder die profilierte Scheibe 25 sind mittels der zugeordneten Betätigungsstangen 23 unabhängig voneinander steuerbar. Die Steuerung der Betätigungsstangen 23 kann in die Programmablaufsteuerung einbezogen sein. Dadurch ergeben sich zusätzliche Möglichkeiten zur Beeinflussung der Düsenringspaltgeometrie während des Schlauchaustrittes aus der Düse.

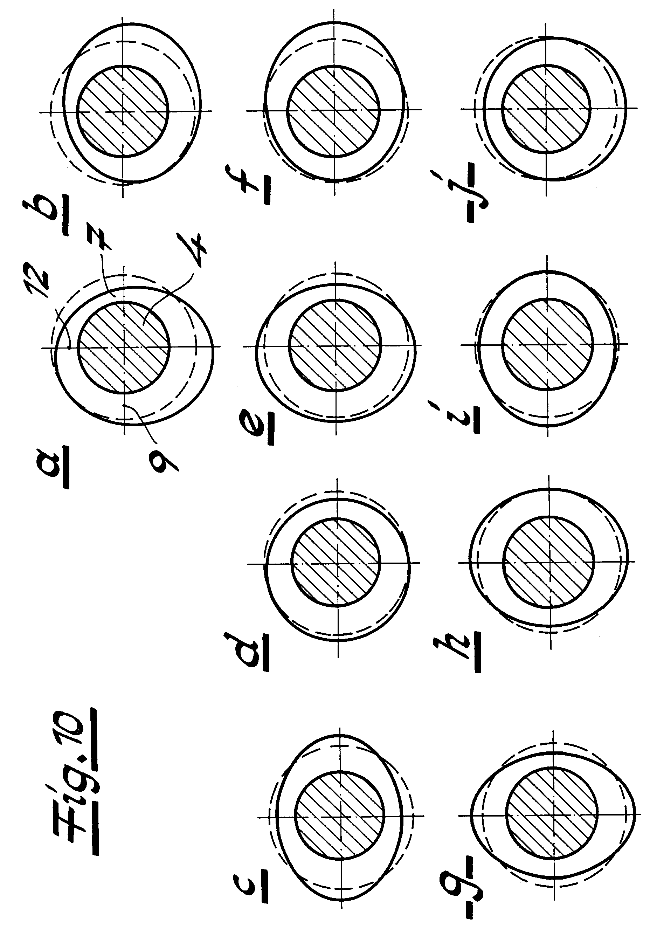

Der Kraftantrieb 8 und der Zusatzkraftantrieb 11 können, bezogen auf eine radiale Schnittebene durch den Extrusionskopf, in derselben Schnittebene angeordnet sein oder, wie in Fig. 8 dargestellt, axialversetzt angeordnet werden. Bei der Ausführung gemäß Fig. 8 greift der Zusatzkraftantrieb 11 z. B. an einem düsenaustrittsfernen Ende des Tragrings 10, der den formstabilen Kragen 16 der Hülse 5 zugeordnet ist, an.

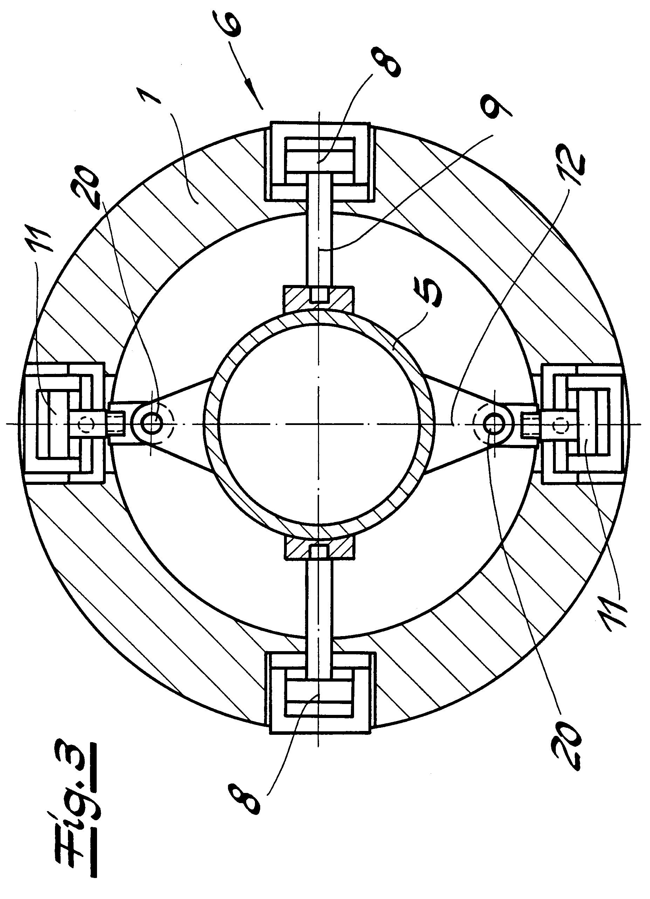

Bei der in Fig. 3 dargestellten Ausführung sind an die elastisch verformbare Hülse 5 zwei Kraftantriebe 8 zug- und druckfest sowie zwei weitere, radial zur Mittelachse des Düsenkerns ausgerichtete Zusatzkraftantriebe 11 angeschlossen. Die Kraftrichtung der Zusatzkraftantriebe ist unter einem beliebigen Winkel zur Deformationsachse ausgerichtet. Im Ausführungsbeispiel ist die Achse 12, auch Verschiebeachse genannt, im rechten Winkel zur Deformationsachse 9, die durch die Kraftantriebe 8 definiert ist, angeordnet. Die Zusatzkraftantriebe 11 sind unter Zwischenschaltung eines Gelenks 20 zug- und druckfest angeschlossen. Die Gelenke 20 weisen zwei Gelenkachsen auf und gleichen einen Versatz des Kraftangriffspunktes in Umfangsrichtung der Hülse 5 von der Kraftrichtung des betreffenden Zusatzkraftantriebes 11 aus. Die gelenkige Anordnung der Zusatzkraftantriebe 11 lassen demzufolge eine Verschiebebewegung der Hülse 5 mit einer Bewegungskomponente quer zur Kraftrichtung der Zusatzkraftantriebe 11 zu. Dies ermöglicht es, die Zusatzkraftantriebe 11 in einem beliebigen Winkel, bezogen auf die durch die Kraftantriebe definierte Deformationsachse 9, auszurichten. Die beiden Zusatzkraftantriebe 11 sind in einer Achse angeordnet und unabhängig steuerbar, wobei nach Maßgabe der Stellbewegungen der Zusatzantriebe 11 die Hülse 5 deformierbar und/oder in Richtung der von den Zusatzkraftantrieben 11 definierten Verschiebeachse 12 verschiebbar ist. Auch bei dieser Ausführung der Erfindung ist der Düsenringspalt 7 des Extrusionskopfes in vielfältiger Weise beeinflußbar.

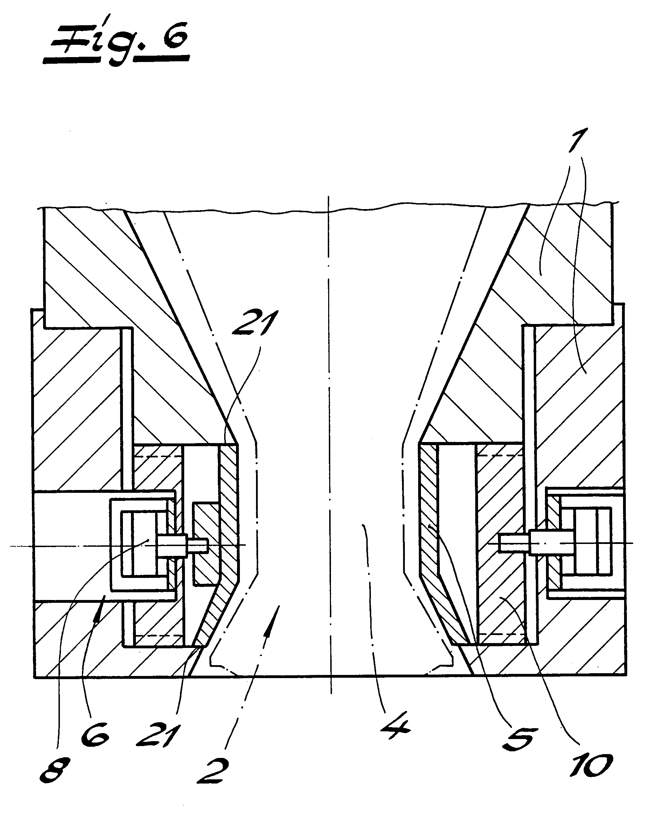

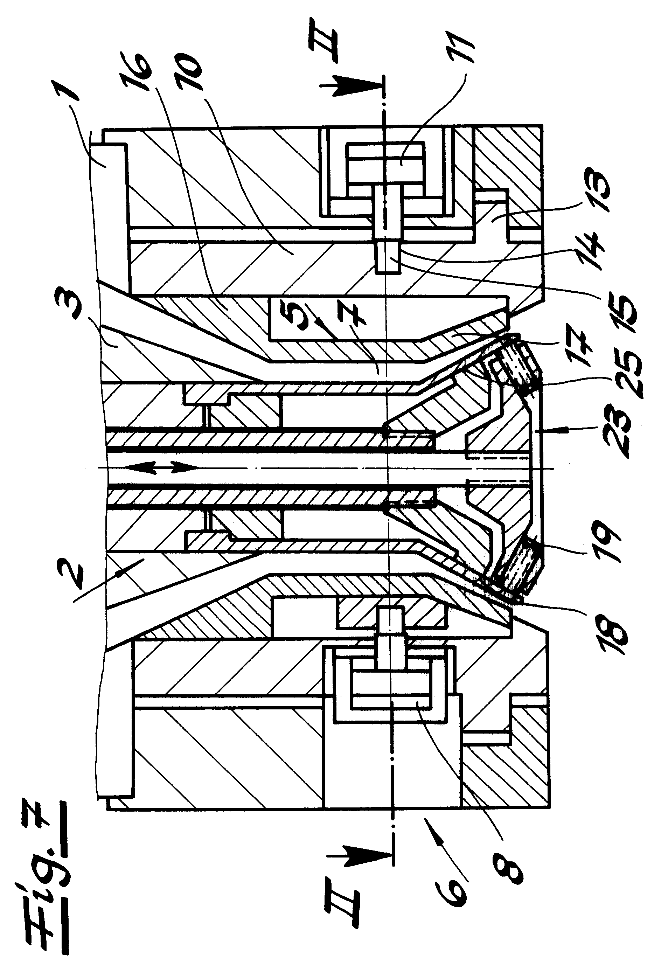

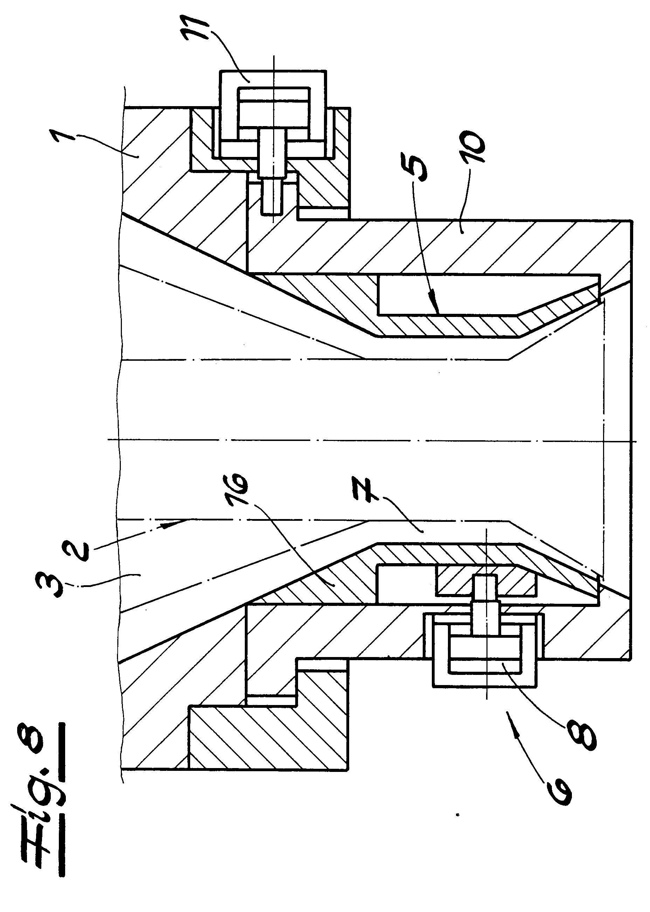

Die elastisch verformbare Hülse 5 ist gemäß Fig. 6 in einen Ringraum des Düsengehäuses 1 eingesetzt, wobei die beiden Stirnflächen der Hülse 5 an zugeordneten Ringflächen 21 des Ringraumes gleiten. Der Figur entnimmt man ferner, daß die Stirnflächen des Tragringes 10 auf denselben Ringflächen 21 gleiten. Der Tragring ist allerdings auch ohne axiale Abstützung einsetzbar, was durch die gestrichelt dargestellte Kontur angedeutet ist.

Im Rahmen der Erfindung liegt es, den Kraftantrieb und/oder den Zusatzkraftantrieb mit einem vorzugsweise einstellbaren Anschlag zu kombinieren. Der Anschlag ist am Umfang der Hülse angeordnet und wirkt auf die Hülse deformierend ein, wenn die Hülse unter der Stellbewegung des Kraftantriebes und/oder des Zusatzkraftantriebes radial in Richtung auf das Anschlagelement verschoben wird.

Die Fig. 9 zeigt für einen Extrusionskopf, der zwei in einer Deformationsachse 9 angeordnete Kraftantriebe 8 sowie einen rechtwinklig dazu ausgerichteten Zusatzkraftantrieb 11 aufweist, den Programmablauf für die Stellbewegungen A, B der beiden Kraftantriebe 8 sowie die Stellbewegung C des Zusatzkraftantriebes 11 während der Extrusion eines schlauchförmigen Vorformlings. Der Vorformling soll eine sowohl in Längsrichtung als auch in Umfangsrichtung mit Dick- und Dünnstellen versehene ungleichmäßige Massenverteilung aufweisen, die so eingerichtet ist, daß der Vorformling zu einem Kunststoff-Kraftstoffbehälter blasgeformt werden kann, der sich durch eine annähernd gleichmäßige Wandstärke auszeichnet. Der Fig. 9 entnimmt man, daß die Stellbewegungen der Kraftantriebe 8 sowie des Zusatzkraftantriebes 11 unabhängig steuerbar sind, wobei drückende und ziehende Stellbewegungen der auf die Hülse 5 wirkenden Kraftantriebe 8 kombinierbar sind. Im Ausführungsbeispiel führt die Hülse 5 radiale Verschiebebewegungen aus, die bei den Programmablaufpunkten P20 und P8 besonders ausgeprägt sind. Bei Ablauf der Programmpunkte P2 bis P5 erfolgt eine elliptische Deformation der Hülse 5 unter Zugkräften. Radiale Verschiebebewegungen des Tragrings 10, entsprechend Kurve C, addieren sich zu den Deformationen und Verschiebungen der Hülse 5.

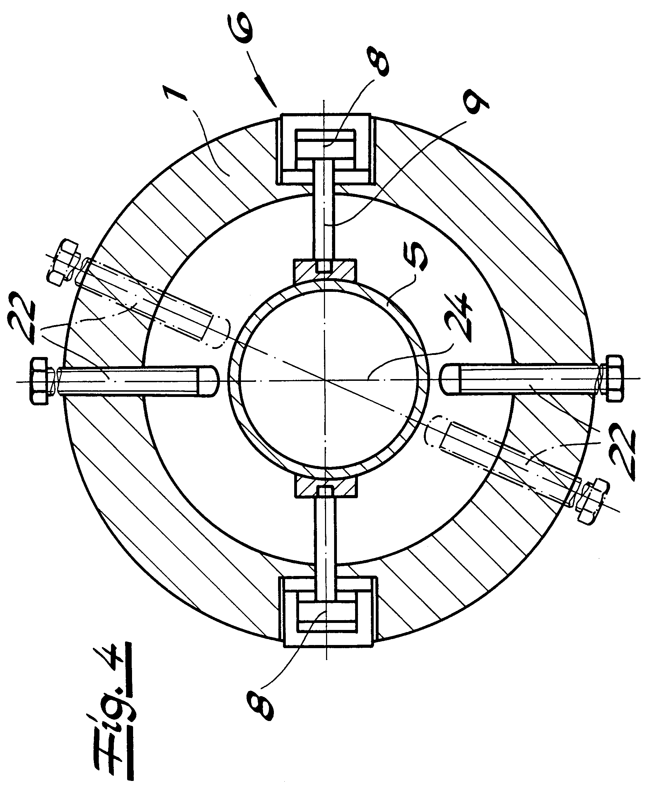

Abgesehen von den beschriebenen Steuerungsvorgängen kann die Stellbewegung des Zusatzkraftantriebes 11 auch für eine Düsenfernzentrierung genützt werden. Bei der Düsenfernzentrierung handelt es sich um Stellbewegungen des Zusatzkraftantriebes 11, die bei der Einstellung der Maschine vorgenommen werden und gegebenenfalls zum Zwecke der Korrektur in größeren, nicht an den Maschinenzyklus gebundenen Intervallen wiederholt werden. Bei der Düsenfernzentrierung führt der Zusatzkraftantrieb 11 keine Stellbewegungen aus, die bei jedem Maschinenzyklus wiederholt werden. Wenn die Deformationsachse 9 und die durch den Zusatzkraftantrieb 11 definierte Verschiebeachse 12 unter einem Winkel von 45° bis 90° zueinander ausgerichtet sind, kann die Position der Hülse 5 in Bezug auf den Düsenkern 2 sehr exakt mittels der fernbetätigten Kraft- und Zusatzkraftantriebe 8, 11 eingestellt bzw. zentriert werden. Alle im Rahmen der Erfindung beschriebenen Ausführungen, die einen Tragring 10 aufweisen, sind einsetzbar, wenn der Zusatzkraftantrieb 11 lediglich zur Zentrierung der Düse genutzt wird. Darüber hinaus sind auch die Anordnungen, die in den Fig. 3 und 4 dargestellt sind, bei der Düsenfernzentrierung nutzbar, wenn die dargestellten Stelleinrichtungen 8, 11, 22 nicht am Düsenkörper 1 sondern an einem nicht dargestellten Tragring angeordnet werden und dieser Tragring durch einen Zusatzkraftantrieb verschiebbar ist.

Bei der in Fig. 4 dargestellten Ausführung der Erfindung sind am Umfang der Hülse Anschlagelemente 22 angeordnet, die bei einer durch die Stellbewegung der Kraftantriebe 8 bewirkten Verschiebung und/oder Deformation der Hülse 5 an der Hülse 5 anliegen und deformierend auf diese einwirken. Die Anschlagelemente 22 sind radial einstellbar im Düsengehäuse 1 gehalten. In der Fig. 4 ist angedeutet, daß die Anschlagelemente 22 so positionierbar sind, daß sie erst dann auf die Hülse 5 deformierend einwirken, nachdem die Hülse 5 durch eine Stellbewegung der Kraftantriebe 8 deformiert und/oder verschoben worden ist. Die Abstützung der Anschlagelemente 22 an der Hülse 5 läßt stets eine Verschiebebewegung der Hülse 5 an der Kontaktfläche des Anschlagelementes 22 zu. Im Ausführungsbeispiel sind zwei Anschlagelemente 22 diametral gegenüberliegend angeordnet. Die durch die Abstützpunkte der Anschlagelemente verlaufende Kraftwirkungslinie 24 kann zur Deformationsachse 9 beliebig ausgerichtet sein. Im Ausführungsbeispiel stehen die durch die Anschlagelemente 22 definierte Kraftwirkungslinie 24 und die Deformationsachse 9, die durch die Kraftantriebe 8 definiert ist, in einem rechten Winkel zueinander. Angedeutet ist, daß die Anschlagelemente 22 in Umfangsrichtung der Hülse 5 auch betriebsmäßig verstellbar angeordnet sein können.

Ein oder mehrere Anschlagelemente 22 können auch durch gesteuerte oder geregelte Stellantriebe ersetzt werden, die nicht mit der Hülse 5 verbunden sind.

Tragring bezeichnet im Rahmen der Erfindung einen zur Halterung der Kraftantriebe geeigneten Stützkörper. Er kann als geschlossener Ring oder als Ringsegment ausgeführt sein, aber auch andere Gestaltungen sollen nicht ausgeschlossen sein.

## Patentansprüche

1. Extrusionskopf für eine Anlage zum Extrusionsblasformen von Hohlkörpern, insbesondere Kunststoff-Kraftstoffbehältern, mit
einem Düsengehäuse (1),
einem Düsenkern (2),
einer am Düsenaustritt angeordneten elastisch verformbaren Hülse (5) und
einer auf die Hülse (5) wirkenden Stelleinrichtung (6),
wobei die Hülse (5) einen Wandabschnitt eines zwischen dem Düsengehäuse (1) und dem Düsenkern (2) angeordneten Düsenringspaltes (7) bildet und wobei die Stelleinrichtung (6) mindestens einen während der Extrusion steuerbaren Kraftantrieb (8) aufweist, dessen Stellbewegung in mindestens einer radial zur Mittelachse des Düsenkerns (2) ausgerichteten Deformationsachse (9) Zug- und/oder Druckkräfte auf die Hülse (5) ausübt, **dadurch gekennzeichnet**, daß die Hülse (5) und der zugeordnete Kraftantrieb (8) an einem Tragring (10) angeordnet sind, der im Düsengehäuse (1) radial beweglich angeordnet und mittels eines steuerbaren Zusatzkraftantriebes (11) radial verstellbar ist, wobei durch Superposition der Stellbewegungen des Kraftantriebes (8) sowie des Zusatzkraftantriebes (11) die Geometrie des Düsenringspaltes (7) am Düsenaustritt dynamisch regelbar ist.

2. Extrusionskopf nach Anspruch 1, dadurch gekennzeichnet, daß der Tragring (10) im Düsengehäuse (1) radial beweglich abgestützt ist, Axialkräfte aufnimmt und diese auf das Düsengehäuse (1) überträgt, wobei der Zusatzkraftantrieb (11) am Düsengehäuse (1) befestigt ist und biegemomentfrei auf den Tragring (10) arbeitet.

3. Extrusionskopf nach Anspruch 1 oder 2, dadurch gekennzeichnet, daß eine Mehrzahl von Kupplungsausnehmungen (14) am Umfang des Tragringes (10) verteilt angeordnet sind und daß der Zusatzkraftantrieb (11) einen an die Kupplungsausnehmungen (14) angepaßten Anschlußzapfen (15) aufweist, wobei die Ausrichtung der Kraftwirkungslinie des Zusatzkraftantriebes (11) zur Deformationsachse (9) durch die Zuordnung des Anschlußzapfens (15) und der Kupplungsausnehmung (14) mit einer entsprechenden Drehung des Tragringes (10) einstell- und betriebsmäßig veränderbar ist.

4. Extrusionskopf für eine Anlage zum Extrusionsblasformen von Hohlkörpern, insbesondere Kunststoff-Kraftstoffbehältern, mit
einem Düsengehäuse (1),
einem Düsenkern (2),
einer am Düsenaustritt angeordneten elastisch verformbaren Hülse (5) und
einer auf die Hülse (5) wirkenden Stelleinrichtung (6),
wobei die Hülse (5) einen Wandabschnitt eines zwischen dem Düsengehäuse (1) und dem Düsenkern (2) angeordneten Düsenringspaltes (7) bildet und wobei die Stelleinrichtung (6) mindestens einen während der Extrusion steuerbaren Kraftantrieb (8) aufweist, dessen Stellbewegung in mindestens einer radial zur Mittelachse des Düsenkerns ausgerichteten Deformationsachse (9) Zug- und/oder Druckkräfte auf die Hülse (5) ausübt, **dadurch gekennzeichnet**, daß an die Hülse (5) mindestens ein Zusatzkraftantrieb (11) angeschlossen ist, wobei die Kraftrichtung des Zusatzkraftantriebes (11) radial unter einem beliebig einstellbaren Winkel zur Deformationsachse (9) ausgerichtet ist und wobei die Abstützung des Zusatzkraftantriebes (11) an der Hülse (5) eine Verschiebebewegung der Hülse (5) mit einer Bewegungskomponente quer zur Kraftrichtung des Zusatzkraftantriebes (11) zuläßt.

5. Extrusionskopf nach Anspruch 4, dadurch gekennzeichnet, daß der Zusatzkraftantrieb (11) unter Zwischenschaltung eines Gelenks (20) zug- und druckfest an die Hülse (5) angeschlossen ist, wobei das Gelenk (20) zwei Gelenkachsen aufweist und einen Versatz des Kraftangriffspunktes in Umfangsrichtung der Hülse (5) ausgleicht.

6. Extrusionskopf nach Anspruch 4 oder 5, dadurch gekennzeichnet, daß auf die elastisch verformbare Hülse (5) zwei Zusatzkraftantriebe (11) arbeiten, die in einer Achse angeordnet und unabhängig ansteuerbar sind, wobei nach Maßgabe der Stellbewegungen der Zusatzkraftantriebe (11) die Hülse (5) deformierbar ist.

7. Extrusionskopf nach Anspruch 4, dadurch gekennzeichnet, daß auf die Hülse (5) ein Kraftantrieb (8) sowie ein Zusatzkraftantrieb (11) arbeiten,
wobei der Kraftantrieb (8) zug- und druckfest an die Hülse (5) angeschlossen ist,
wobei der Zusatzkraftantrieb (11) unter Zwischenschaltung eines Gelenks (20) ebenfalls zug- und druckfest angeschlossen ist,
daß der Hülse (5) ein zusätzlicher Anschlag zugeordnet ist, wobei der Kraftantrieb (8), der Zusatzkraftantrieb (11) und der Anschlag am Umfang der Hülse (5) verteilt angeordnet sind.

8. Extrusionskopf nach einem der Ansprüche 1 bis 7, dadurch gekennzeichnet, daß der elastisch verformbaren Hülse (5) ein Anschlag zugeordnet ist, der am Düsengehäuse (1) oder am Tragring (10) radial einstellbar angeordnet ist oder mit einem Stellantrieb ausgerüstet ist und dynamisch geregelte Stellbewegungen ausführt, die auf die Stellbewegungen des Kraft- und Zusatzkraftantriebes abgestimmt sind.

9. Extrusionskopf für eine Anlage zum Extrusionsblasformen von Hohlkörpern, insbesondere Kunststoff-Kraftstoffbehältern mit
einem Düsengehäuse (1),
einem Düsenkern (2),
einer am Düsenaustritt angeordneten elastisch verformbaren Hülse (5) und
einer auf die Hülse (5) wirkenden Stelleinrichtung (6),
wobei die Hülse (5) einen Wandabschnitt eines zwischen dem Düsengehäuse (1) und dem Düsenkern (2) angeordneten Düsenringspaltes (7) bildet und wobei die Stelleinrichtung (6) mindestens einen während der Extrusion steuerbaren Kraftantrieb (8) aufweist, dessen Stellbewegung in mindestens einer radial zur Mittelachse des Düsenkern (2) ausgerichteten Deformationsachse (9) Zug- und/oder Druckkräfte auf die Hülse (5) ausübt, **dadurch gekennzeichnet**, daß mindestens ein im Düsengehäuse (1) abgestütztes Anschlagelement (22) zum Kraftantrieb (8) versetzt am Umfang der Hülse (5) angeordnet ist, welches bei einer durch die Stellbewegung des Kraftantriebes (8) bewirkten Verschiebung und/oder Deformation der Hülse (5) an der Hülse (5) anliegt und deformierend auf diese einwirkt.

10. Extrusionskopf nach Anspruch 9, dadurch gkennzeichnet, daß zwei Anschlagelemente (22) diametral gegenüberliegend am Umfang der Hülse (5) vorgesehen sind.

11. Extrusionskopf nach Anspruch 9 oder 10, dadurch gekennzeichnet, daß die Anschlagelemente (22) in Umfangsrichtung der Hülse (5) verstellbar angeordnet sind.

12. Extrusionskopf nach einem der Ansprüche 9 bis 11, dadurch gkeennzeichnet, daß die Anschlagelemente (22) radial verstellbar am Düsengehäuse (1) positioniert sind.

13. Extrusionskopf nach einem der Ansprüche 9 bis 12, dadurch gekennzeichnet, daß die Anschlagelemente (22) jeweils einen Stellantrieb aufweisen und dynamisch geregelte Stellbewegungen in Umfangsrichtung und/oder in radialer Richtung ausführen.

14. Extrusionskopf für eine Anlage zum Extrusionsblasformen von Hohlkörpern, insbesondere Kunststoff-Kraftstoffbehältern, mit
einem Düsengehäuse (1)
einem Düsenkern (2),
einer am Düsenaustritt angeordneten elastisch verformbaren Hülse (5) und
einer auf die Hülse (5) wirkenden Stelleinrichtung (6),
wobei die Hülse (5) einen Wandabschnitt eines zwischen dem Düsengehäuse (1) und dem Düsenkern (2) angeordneten Düsenringspaltes (7) bildet und wobei die Stelleinrichtung (6) mindestens einen während der Extrusion steuerbaren Kraftantrieb (8) aufweist, dessen Stellbewegung in mindestens einer radial zur Mittelachse des Düsenkerns (2) ausgerichteten Deformationsachse (9) Zug- und/oder Druckkräfte auf die Hülse (5) ausübt, **dadurch gekennzeichnet**, daß die Hülse (5) und der zugeordnete Kraftantrieb (8) an einem Tragring (10) angeordnet sind, der im Düsengehäuse (1) radial beweglich angeordnet und mittels eines fernbetätigten Zusatzkraftantriebes (11) radial verstellbar ist und daß die durch den Kraftantrieb vorgegebene Deformationsachse (9) und die durch die Kraftrichtung des Zusatzkraftantriebes (11) vorgegebene Verschiebeachse (12) unter einem Winkel von 45° bis 90° zueinander ausgerichtet sind, wobei durch Superposition der Stellwege eine Änderung der Geometrie des Düsenringspaltes (7) am Düsenaustritt zum Zwecke der Düsenzentrierung erfolgt.

15. Extrusionskopf nach einem der Ansprüche 1 bis 14, dadurch gekennzeichnet, daß an die elastisch verformbare Hülse (5) zwei Kraftantriebe (8) zug- und druckfest angeschlossen sind, die in der Deformationsachse (9) angeordnet sind, an gegenüberliegenden Stellen an der Hülse (5) angreifen und unabhängig ansteuerbar sind, wobei nach Maßgabe der Stellbewegungen der beiden Kraftantriebe (8) die Hülse (5) durch Zug oder Druck deformierbar und/oder in Richtung der Deformationsachse (9) radial zur Mittelachse des Düsenkerns (2) verschiebbar ist.

16. Extrusionskopf nach einem der Ansprüche 1 bis 14, dadurch gekennzeichnet, daß der Kraftantrieb (8) über eine Gestängeanordnung ein Stellelement betätigt, das bei einer Stellbewegung des Kraftantriebes auf die Hülse (5) deformierend einwirkt.

17. Extrusionskopf nach einem der Ansprüche 1 bis 16, dadurch gekennzeichnet, daß das vom Düsenaustritt abgewandte rückwärtige Ende der Hülse (5) als formstabiler Kragen (16) ausgebildet ist, der radial- sowie axialfest an dem Tragring (10) oder einer Sitzfläche des Düsengehäuses (1) gehalten ist, und daß an den Kragen (16) ein dünnwandiger, elastischer verformbarer Mantel (17) angeformt ist.

18. Extrusionskopf nach Anspruch 17, dadurch gekennzeichnet, daß die vorderseitige Stirnfläche des Mantels (17) an einer Flanschfläche des Tragringes (10) bzw. des Düsengehäuses (1) anliegt.

19. Extrusionskopf nach einem der Ansprüche 1 bis 16, dadurch gekennzeichnet, daß die elastisch verformbare Hülse (5) in einen Ringraum des Tragringes (10) oder des Düsengehäuses (1) eingesetzt ist und beide Stirnflächen der Hülse (5) an zugeordneten Ringflächen (21) des Ringraumes gleiten.

20. Extrusionskopf nach einem der Ansprüche 1 bis 19, dadurch gekennzeichnet, daß der Düsenkern (2) eine den Düsenringspalt (7) begrenzende elastisch verformbare Manschette (18) sowie auf die Manschette (18) im wesentlichen radial einwirkende Stellelemente (19) aufweist, wobei mittels der Stellelemente (19) die Außenkontur der Manschette (18) einstellbar ist und die Geometrie des zwischen der Manschette (18) und der elastisch verformbaren Hülse (5) gebildeten Düsenabschnittes des Düsenringspaltes (7) durch eine Betätigung der Stellelemente (19) eine Grundeinstellung erfährt.

21. Extrusionskopf nach Anspruch 20, dadurch gekennzeichnet, daß zumindest eines der Stellelemente (19) fernbetätigbar ist.

22. Extrusionskopf nach Anspruch 20 oder 21, dadurch gekennzeichnet, daß die Stellelemente (19) an mindestens eine koaxial zur Mittelachse des Düsenkerns angeordnete Betätigungsstange (23) angeschlossen sind, die axial verschiebbar und/oder drehbar im Düsenkern (2) angeordnet ist und zum Zwecke der Betätigung der Stellelemente (19) einen Stellhub und/oder eine Drehbewegung ausführt.

23. Extrusionskopf nach einem der Ansprüche 20 bis 22, dadurch gekennzeichnet, daß im Düsenkern zwei oder mehrere Betätigungsstangen (23) koaxial angeordnet sind, an die jeweils ein Stellelement (19) oder eine Gruppe von Stellelementen oder eine profilierte Scheibe (25) angeschlossen sind, wobei die Stellelemente (19) bzw. die profilierte Scheibe (25) mittels der zugeordneten Betätigungsstangen (23) unabhängig voneinander steuerbar sind.

24. Extrusionskopf nach einem der Ansprüche 22 bis 23, dadurch gekennzeichnet, daß der Düsenkern (2) eine Dornaufnahme (3) sowie einen axial verstellbaren Dorn (4) aufweist, an den die flexible Manschette (18) angeschlossen ist, und daß die Betätigungsstangen (23) im Dorn (4) beweglich geführt sind.

25. Extrusionskopf nach einem der Ansprüche 1 bis 24, dadurch gekennzeichnet, daß mindestens ein Kraftantrieb (8) mit einer senkrechten Gelenkachse (26) ausgeführt ist.

26. Extrusionskopf nach einem der Ansprüche 1 bis 25, dadurch gekennzeichnet, daß ein Zusatzkraftantrieb unter Zwischenschaltung von zwei vertikalen Gelenkachsen (20, 27) an den Tragring (10) angeschlossen ist.

## Claims

1. An extrusion head for an installation for the extrusion blow-moulding of hollow bodies, particularly plastics fuel tanks, having
an extrusion die housing (1),
an extrusion die core (2)
an elastically deformable sleeve (5) disposed on the extrusion die outlet, and
an adjusting device (6) which acts on the sleeve (5),
wherein the sleeve (5) forms a wall section of an annular extrusion die gap (7) disposed between the extrusion die housing (1) and the extrusion die core (2) and wherein the adjusting device (6) comprises at least one actuator (8) which can be controlled during extrusion, the adjusting movement of which actuator exerts tensile and/or compressive forces on the sleeve (5) on at least one axis of deformation (9) which is aligned radially in relation to the centre line of the extrusion die core (2), characterised in that the sleeve (5) and the associated actuator (8) are disposed on a backing ring (10), which is disposed so that it can move radially in the extrusion die housing (1) and which is adjustable radially by means of a controllable additional actuator (11), wherein the geometry of the annular extrusion die gap (7) at the extrusion die outlet can be dynamically controlled by the superposition of the adjusting movements of the actuator (8) and of the additional actuator (11).

2. An extrusion head according to claim 1, characterised in that the backing ring (10) is supported so that it is radially movable in the extrusion die housing (1), and absorbs axial forces and transmits these to the extrusion die housing (1), wherein the additional actuator (11) is fixed to the extrusion die housing (1) and acts on the backing ring (10) without a bending moment.

3. An extrusion head according to claims 1 or 2, characterised in that a multiplicity of coupling recesses (14) is distributed on the circumference of the backing ring (10) and that the additional actuator (11) has a connection shank (15) matched to the coupling recesses (14), wherein the alignment of the line of action of the force of the additional actuator (11) in relation to the axis of deformation (9) can be varied according to the adjustment and according to the operation by coordinating the connection shank (15) and the coupling recess (14) by a corresponding rotation of the backing ring (10).

4. An extrusion head for an installation for the extrusion blow-moulding of hollow bodies, particularly plastics fuel tanks, having
an extrusion die housing (1),
an extrusion die core (2)
an elastically deformable sleeve (5) disposed on the extrusion die outlet, and
an adjusting device (6) which acts on the sleeve (5),
wherein the sleeve (5) forms a wall section of an annular extrusion die gap (7) disposed between the extrusion die housing (1) and the extrusion die core (2), and wherein the adjusting device (6) comprises at least one actuator (8) which can be controlled during extrusion, the adjusting movement of which actuator exerts tensile and/or compressive forces on the sleeve (5) on at least one axis of deformation (9) which is aligned radially in relation to the centre line of the extrusion die core (2), characterised in that at least one additional actuator (11) is attached to the sleeve (5), wherein the direction of force of the additional actuator (11) is aligned radially at an arbitrarily adjustable angle to the axis of deformation (9) and wherein the support of the additional actuator (11) on the sleeve (5) permits a displacement movement of the sleeve (5) with a component of movement transverse to the direction of force of the additional actuator (11).

5. An extrusion head according to claim 4, characterised in that the additional actuator (11) is attached to the sleeve (5) in a tension- and compression-proof manner with a joint (20) interposed therebetween, wherein the joint (20) has two axes of articulation and compensates for a displacement of the point of action of the force in the circumferential direction of the sleeve (5).

6. An extrusion head according to claims 4 or 5, characterised in that two additional actuators (11), which are disposed on one axis and which can be operated independently, act on the elastically deformable sleeve (5), wherein the sleeve (5) can be deformed in accordance with the adjusting movements of the additional actuators (11).

7. An extrusion head according to claim 4, characterised in that an actuator (8) and an additional actuator (11) act on the sleeve (5), wherein the actuator (8) is attached to the sleeve (5) in a tension- and compression-proof manner, wherein the additional actuator (11) is likewise attached (5) in a tension- and compression-proof manner with the interposition of a joint (20), that an additional limit stop is associated with the sleeve (5), wherein the actuator (8), the additional actuator (11) and the limit stop are disposed distributed on the circumference of the sleeve (5).

8. An extrusion head according to any one of claims 1 to 7, characterised in that a limit stop is associated with the elastically deformable sleeve (5), which limit stop is radially adjustably disposed on the extrusion die housing (1) or on the backing ring (10) or which is equipped with an actuating drive and which executes dynamically controlled adjusting movements which are matched to the adjusting movements of the actuator and of the additional actuator.

9. An extrusion head for an installation for the extrusion blow-moulding of hollow bodies, particularly plastics fuel tanks, having
an extrusion die housing (1),
an extrusion die core (2)
an elastically deformable sleeve (5) disposed on the extrusion die outlet, and
an adjusting device (6) which acts on the sleeve (5),
wherein the sleeve (5) forms a wall section of an annular extrusion die gap (7) disposed between the extrusion die housing (1) and the extrusion die core (2), and wherein the adjusting device (6) comprises at least one actuator (8) which can be controlled during extrusion, the adjusting movement of which actuator exerts tensile and/or compressive forces on the sleeve (5) on at least one axis of deformation (9) which is aligned radially in relation to the centre line of the extrusion die core (2), characterised in that at least one limit stop element (22) which is supported in the extrusion die housing (1) is disposed on the circumference of the sleeve (5) offset in relation to the actuator (8), and which during a displacement and/or deformation of the sleeve (5) which is effected by the adjusting movement of the actuator (8) is seated against the sleeve (5) and exerts a deforming action thereon.

10. An extrusion head according to claim 9, characterised in that two limit stop elements (22) are provided diametrically opposed on the circumference of the sleeve (5).

11. An extrusion head according to claims 9 or 10, characterised in that the limit stop elements (22) are disposed so that they can be adjusted in the circumferential direction of the sleeve (5).

12. An extrusion head according to any one of claims 9 to 11, characterised in that the limit stop elements (22) are radially adjustably positioned on the extrusion die housing (1).

13. An extrusion head according to any one of claims 9 to 12, characterised in that the limit stop elements (22) each have an actuating drive and execute dynamically controlled adjusting movements in a circumferential direction and/or in a radial direction.

14. An extrusion head for an installation for the extrusion blow-moulding of hollow bodies, particularly plastics fuel tanks, having
an extrusion die housing (1),
an extrusion die core (2)
an elastically deformable sleeve (5) disposed on the extrusion die outlet, and
an adjusting device (6) which acts on the sleeve (5),
wherein the sleeve (5) forms a wall section of an annular extrusion die gap (7) disposed between the extrusion die housing (1) and the extrusion die core (2), and wherein the adjusting device (6) comprises at least one actuator (8) which can be controlled during extrusion, the adjusting movement of which actuator exerts tensile and/or compressive forces on the sleeve (5) on at least one axis of deformation (9) which is aligned radially in relation to the centre line of the extrusion die core (2), characterised in that the sleeve (5) and the associated actuator (8) are disposed on a backing ring (10), which is disposed so that it can move radially in the extrusion die housing (1) and which is radially adjustable by means of a remote-controlled additional actuator (11), and that the axis of deformation (9) which is predetermined by the actuator and the axis of displacement (12) which is predetermined by the direction of force of the additional actuator (11) are aligned at an angle of 45° to 90° to each other, wherein an alteration of the geometry of the annular extrusion die gap (7) at the extrusion die outlet for the purpose of centring the extrusion die is effected by the superposition of the paths of adjustment.

15. An extrusion head according to any one of claims 1 to 14, characterised in that two actuators (8) are attached in a tension- and compression-proof manner to the elastically deformable sleeve (5), which actuators are disposed on the axis of deformation (9), act at opposite points on the sleeve (5) and are independently controllable, wherein the sleeve (5) is deformable by tension or compression and/or is radially displaceable in the direction of the axis of deformation (9) in relation to the centre line of the extrusion die core (2) in accordance with the adjusting movements of the two actuators (8).

16. An extrusion head according to any one of claims 1 to 14, characterised in that the actuator (8) actuates an adjusting element via a rod assembly arrangement, which adjusting element exerts a deforming action on the sleeve (5) during an adjusting movement of the actuator.

17. An extrusion head according to any one of claims 1 to 16, characterised in that the back end of the sleeve (5) remote from the extrusion die outlet is constructed as a dimensionally stable collar (16) which is held radially and axially fixed on the backing ring (10) or on a seating face of the extrusion die housing (1), and that a thin-walled, elastically deformable jacket (17) is integrally formed on the collar (16).

18. An extrusion head according to claim 17, characterised in that the front end face of the jacket (17) is seated against a flange face of the backing ring (10) or of the extrusion die housing (1).

19. An extrusion head according to any one of claims 1 to 16, characterised in that the elastically deformable sleeve (5) is inserted in an annular space of the backing ring (10) or of the extrusion die housing (1) and both end faces of the sleeve (5) slide on associated annular faces (21) of the annular space.

20. An extrusion head according to any one of claims 1 to 19, characterised in that the extrusion die core (2) comprises an elastically deformable collar (18) which delimits the extrusion die gap (7) and comprises adjusting elements (19) which act substantially radially on the collar (18), wherein the external contour of the collar (18) can be adjusted by means of the adjusting elements (19), and the geometry of the extrusion die section of the annular extrusion die gap (7) which is formed between the collar (18) and the elastically deformable sleeve (5) is subjected to a basic adjustment by the actuation of the adjusting elements (19).

21. An extrusion head according to claim 20, characterised in that at least one of the adjusting elements (19) can be remote-controlled.

22. An extrusion head according to claims 20 or 21, characterised in that the adjusting elements (19) are attached to at least one actuating rod (23), which is disposed coaxially with the centre line of the extrusion die core, which is axially displaceably and/or rotatably disposed in the extrusion die core (2), and which executes an adjusting stroke and/or a rotary movement for the purpose of actuating the adjusting elements (19).

23. An extrusion head according to any one of claims 20 to 22, characterised in that two or more actuating rods (23) are coaxially disposed in the extrusion die core, to each of which actuating rods an adjusting element (19) or a group of adjusting elements or a profiled disc (25) is attached, wherein the adjusting elements (19) or the profiled disc (25) can be controlled independently of each other by means of the associated actuating rods (23).

24. An extrusion head according to any one of claims 22 to 23, characterised in that the extrusion die core (2) comprises a mandrel receiver (3) and comprises an axially adjustable mandrel (4) to which the flexible collar (18) is attached, and that the actuating rods (23) are movably guided in the mandrel (4).

25. An extrusion head according to any one of claims 1 to 24, characterised in that at least one actuator (8) is constructed with a perpendicular axis of articulation (26).

26. An extrusion head according to any one of claims 1 to 25, characterised in that one additional actuator is attached to the backing ring (10) with two vertical axes of articulation (20, 27) interposed therebetween.

## Revendications

1. Tête d'extrusion pour une installation d'extrusion-soufflage de corps creux, en particulier de réservoirs de carburant en matière plastique, comprenant
un carter de filière (1),
un noyau de filière (2),
un fourreau déformable élastiquement (5) disposé en sortie de filière, et
un dispositif de réglage (6) agissant sur le fourreau (5),
le fourreau (5) formant une portion de paroi d'une fente annulaire de filière (7) située entre le carter de filière (1) et le noyau de filière (2), et le dispositif de réglage (6) comportant au moins un moyen d'entraînement (8) qui peut être commandé durant l'extrusion et dont le mouvement de réglage exerce des forces de traction et/ou de compression sur le fourreau (5) selon au moins un axe de déformation (9) orienté radialement par rapport à l'axe médian du noyau de filière (2), caractérisée en ce que le fourreau (5) et le moyen d'entraînement associé (8) sont disposés sur un anneau porteur (10) qui est disposé avec une possibilité de déplacement radial dans le carter de filière (1) et qui peut être déplacé radialement à l'aide d'un moyen d'entraînement supplémentaire commandé (11), la géométrie de la fente annulaire de filière (7) en sortie de filière pouvant être réglée de manière dynamique en superposant le mouvement de réglage du moyen d'entraînement (8) et celui du moyen d'entraînement supplémentaire (11).

2. Tête d'extrusion selon la revendication 1, caractérisée en ce que l'anneau porteur (10) prend appui avec une possibilité de déplacement radial dans le carter de filière (1), absorbe des forces axiales et les transmet au carter de filière (1), le moyen d'entraînement supplémentaire (11) étant fixé au carter de filière (1) et agissant sur l'anneau porteur (10) sans couple de flexion.

3. Tête d'extrusion selon la revendication 1 ou 2, caractérisée en ce qu'une pluralité d'évidements d'accouplement (14) sont répartis à la périphérie de l'anneau porteur (10), et en ce que le moyen d'entraînement supplémentaire (11) comporte un téton de jonction (15) adapté aux évidements d'accouplement (14), l'orientation de la ligne d'application de forces du moyen d'entraînement supplémentaire (11) par rapport à l'axe de déformation (9) pouvant être modifiée en faisant correspondre, lors du réglage et du fonctionnement, le téton de jonction (15) et l'évidement d'accouplement (14) à une rotation appropriée de l'anneau porteur (10).

4. Tête d'extrusion pour une installation d'extrusion-soufflage de corps creux, en particulier de réservoirs de carburant en matière plastique, comprenant
un carter de filière (1),
un noyau de filière (2),
un fourreau déformable élastiquement (5) disposé en sortie de filière, et
un dispositif de réglage (6) agissant sur le fourreau (5),
le fourreau (5) formant une portion de paroi d'une fente annulaire de filière (7) située entre le carter de filière (1) et le noyau de filière (2), et le dispositif de réglage (6) comportant au moins un moyen d'entraînement (8) qui peut être commandé durant l'extrusion et dont le mouvement de réglage exerce des forces de traction et/ou de compression sur le fourreau (5) selon au moins un axe de déformation (9) orienté radialement par rapport à l'axe médian du noyau de filière (2), caractérisée en ce qu'au moins un moyen d'entraînement supplémentaire (11) est relié au fourreau (5), le moyen d'entraînement supplémentaire (11) agissant radialement, selon un angle librement choisi, par rapport à l'axe de déformation (9), et la prise d'appui du moyen d'entraînement supplémentaire (11) sur le fourreau (5) permettant au fourreau (5) de se déplacer avec une composante de déplacement transversale à la direction d'action du moyen d'entraînement supplémentaire (11).

5. Tête d'extrusion selon la revendication 4, caractérisée en ce que le moyen d'entraînement supplémentaire (11) est solidarisé en traction et en compression au fourreau (5) par l'intermédiaire d'une articulation (20), l'articulation (20) comportant deux axes d'articulation et compensant un décalage du point d'application des forces dans la direction circonférentielle du fourreau (5).

6. Tête d'extrusion selon la revendication 4 ou 5, caractérisée en ce que le fourreau déformable élastiquement (5) est soumis à l'action de deux moyens d'entraînement supplémentaires (11) qui sont disposés sur un même axe et peuvent être commandés indépendamment l'un de l'autre, le fourreau (5) pouvant être déformé en proportion des mouvements de réglage des moyens d'entraînement supplémentaires (11).

7. Tête d'extrusion selon la revendication 4, caractérisée en ce que le fourreau (5) est soumis à l'action d'un moyen d'entraînement (8) ainsi que d'un moyen d'entraînement supplémentaire (11),
le moyen d'entraînement (8) étant solidarisé en traction et en compression au fourreau (5),
le moyen d'entraînement supplémentaire (11) étant lui aussi solidarisé en traction et en compression par l'intermédiaire d'une articulation (20),
en ce qu'une butée supplémentaire est associée au fourreau (5), le moyen d'entraînement (8), le moyen d'entraînement supplémentaire (11) et la butée étant répartis à la périphérie du fourreau (5).

8. Tête d'extrusion selon l'une des revendications 1 à 7, caractérisée en ce qu'au fourreau déformable élastiquement (5) est associée une butée qui est disposée avec une possibilité de réglage radial sur le carter de filière (1) ou sur l'anneau porteur (10) ou qui est équipée d'un actionneur et effectue des mouvements de réglage à régulation dynamique qui sont coordonnés aux mouvements de réglage des moyens d'entraînement et d'entraînement supplémentaire.

9. Tête d'extrusion pour une installation d'extrusion-soufflage de corps creux, en particulier de réservoirs de carburant en matière plastique, comprenant
un carter de filière (1),
un noyau de filière (2),
un fourreau déformable élastiquement (5) disposé en sortie de filière, et
un dispositif de réglage (6) agissant sur le fourreau (5),
le fourreau (5) formant une portion de paroi d'une fente annulaire de filière (7) située entre le carter de filière (1) et le noyau de filière (2), et le dispositif de réglage (6) comportant au moins un moyen d'entraînement (8) qui peut être commandé durant l'extrusion et dont le mouvement de réglage exerce des forces de traction et/ou de compression sur le fourreau (5) selon au moins un axe de déformation (9) orienté radialement par rapport à l'axe médian du noyau de filière (2), caractérisée en ce qu'au moins un élément de butée (22) prenant appui sur le carter de filière (1) est disposé à la périphérie du fourreau (5) de manière décalée par rapport au moyen d'entraînement (8), ledit élément de butée (22) étant appliqué contre le fourreau (5) en cas de déplacement et/ou de déformation du fourreau (5) dus au mouvement de réglage du moyen d'entraînement (8) et agissant sur ledit fourreau (5) en le déformant.

10. Tête d'extrusion selon la revendication 9, caractérisée en ce qu'il est prévu deux éléments de butée (22) diamétralement opposés sur la périphérie du fourreau (5).

11. Tête d'extrusion selon la revendication 9 ou 10, caractérisée en ce que les éléments de butée (22) sont disposés avec une possibilité de réglage dans la direction circonférentielle du fourreau (5).

12. Tête d'extrusion selon l'une des revendications 9 à 11, caractérisée en ce que les éléments de butée (22) sont positionnés avec une possibilité de réglage radial sur le carter de filière (1).

13. Tête d'extrusion selon l'une des revendications 9 à 12, caractérisée en ce que les éléments de butée (22) comportent chacun un actionneur et effectuent des mouvements de réglage à régulation dynamique dans la direction circonférentielle et/ou dans la direction radiale.

14. Tête d'extrusion pour une installation d'extrusion-soufflage de corps creux, en particulier de réservoirs de carburant en matière plastique, comprenant
un carter de filière (1),
un noyau de filière (2),
un fourreau déformable élastiquement (5) disposé en sortie de filière, et
un dispositif de réglage (6) agissant sur le fourreau (5),
le fourreau (5) formant une portion de paroi d'une fente annulaire de filière (7) située entre le carter de filière (1) et le noyau de filière (2), et le dispositif de réglage (6) comportant au moins un moyen d'entraînement (8) qui peut être commandé durant l'extrusion et dont le mouvement de réglage exerce des forces de traction et/ou de compression sur le fourreau (5) selon au moins un axe de déformation (9) orienté radialement par rapport à l'axe médian du noyau de filière (2), caractérisée en ce que le fourreau (5) et le moyen d'entraînement associé (8) sont disposés sur un anneau porteur (10) qui est disposé avec une possibilité de déplacement radial dans le carter de filière (1) et qui peut être déplacé radialement à l'aide d'un moyen d'entraînement supplémentaire télécommandé (11), et en ce que l'axe de déformation (9) prédéfini par le moyen d'entraînement et l'axe de déplacement (12) prédéfini par la direction d'action du moyen d'entraînement supplémentaire (11) sont orientés l'un par rapport à l'autre selon un angle de 45° à 90°, la géométrie de la fente annulaire de filière (7) en sortie de filière étant modifiée par superposition des courses de réglage pour centrer la filière.

15. Tête d'extrusion selon l'une des revendications 1 à 14, caractérisée en ce qu'au fourreau déformable élastiquement (5) sont solidarisés en traction et en compression deux moyens d'entraînement (8) qui sont disposés sur l'axe de déformation (9), agissent sur le fourreau (5) en des points opposés et peuvent être commandés indépendamment l'un de l'autre, le fourreau (5) pouvant être déformé en traction ou en pression et/ou déplacé dans le sens de l'axe de déformation (9) radialement par rapport à l'axe médian du noyau de filière (2) en proportion des mouvements de réglage des deux moyens d' entraînement (8).

16. Tête d'extrusion selon l'une des revendications 1 à 14, caractérisée en ce que, par l'intermédiaire d'un agencement de tringlerie, le moyen d'entraînement (8) actionne un élément de réglage qui, en cas de mouvement de réglage du moyen d'entraînement, agit sur le fourreau (5) en le déformant.

17. Tête d'extrusion selon l'une des revendications 1 à 16, caractérisée en ce que l'extrémité arrière du fourreau (5) située à l'opposé de la sortie de filière est conformée en collet indéformable (16) qui est solidarisé radialement et axialement à l'anneau porteur (10) ou à une surface d'assise du carter de filière (1), et en ce qu'une enveloppe périphérique déformable élastiquement (17) à paroi mince est surmoulée sur le collet (16).

18. Tête d'extrusion selon la revendication 17, caractérisée en ce que la surface frontale avant de l'enveloppe périphérique (17) est appliquée contre une surface formant bride de l'anneau porteur (10) ou du carter de filière (1).

19. Tête d'extrusion selon l'une des revendications 1 à 16, caractérisée en ce que le fourreau déformable élastiquement (5) est logé dans un espace annulaire de l'anneau porteur (10) ou du carter de filière (1) et les deux surfaces frontales du fourreau (5) glissent sur des surfaces annulaires associées (21) de l'espace annulaire.

20. Tête d'extrusion selon l'une des revendications 1 à 19, caractérisée en ce que le noyau de filière (2) comporte un manchon déformable élastiquement (18), qui délimite la fente annulaire de filière (7), ainsi que des éléments de réglage (19) agissant sensiblement radialement sur le manchon (18), les éléments de réglage (19) permettant d'agir sur le contour extérieur du manchon (18) et, en actionnant les éléments de réglage (19), d'imposer un réglage de base à la géométrie de la portion de filière de la fente annulaire de filière (7) formée entre le manchon (18) et le fourreau déformable élastiquement (5).

21. Tête d'extrusion selon la revendication 20, caractérisée en ce qu'au moins l'un des éléments de réglage (19) est télécommandé.

22. Tête d'extrusion selon la revendication 20 ou 21, caractérisée en ce que les éléments de réglage (19) sont reliés à au moins une tige d'actionnement (23) qui est disposée coaxialement à l'axe médian du noyau de filière, qui est montée avec une possibilité de déplacement axial et/ou de rotation dans le noyau de filière (2) et, pour actionner les éléments de réglage (19), effectue une course de réglage et/ou un mouvement de rotation.

23. Tête d'extrusion selon l'une des revendications 20 à 22, caractérisée en ce que dans le noyau de filière sont disposées coaxialement deux ou plusieurs tiges d'actionnement (23), à chacune desquelles est relié un élément de réglage (19) ou un groupe d'éléments de réglage ou un disque profilé (25), les éléments de réglage (19) ou le disque profilé (25) pouvant être commandés indépendamment les uns des autres au moyen des tiges d'actionnement associées (23).

24. Tête d'extrusion selon l'une des revendications 22 à 23, caractérisée en ce que le noyau de filière (2) comporte un logement de poinçon (3) ainsi qu'un poinçon à déplacement axial (4) auquel est relié le manchon souple (18), et en ce que les tiges d'actionnement (23) sont guidées de manière mobile dans le poinçon (4).

25. Tête d'extrusion selon l'une des revendications 1 à 24, caractérisée en ce qu'au moins un moyen d'entraînement (8) est conçu avec un axe d'articulation vertical (26).

26. Tête d'extrusion selon l'une des revendications 1 à 25, caractérisée en ce qu'un moyen d'entraînement supplémentaire est relié à l'anneau porteur (10) par l'intermédiaire de deux axes d'articulation verticaux (20, 27).
